# EUROPÄISCHE PATENTSCHRIFT

(11) **EP 1 639 244 B1**
(45) Veröffentlichungstag und Bekanntmachung des Hinweises auf die Patenterteilung: **27.12.2006**
(21) Anmeldenummer: 04736059.9
(22) Anmeldetag: 04.06.2004
(51) Int. Cl.: F02B 29/02, F02D 9/12, F16K 1/12, F16K 15/02

(54) **ZUSATZSTEUERVENTILEINRICHTUNG F R EINEN EINLASSKANAL EINER K OLBENBRENNKRAFTMASCHINE**
SUPPLEMENTARY CONTROL VALVE DEVICE FOR THE INLET CHANNEL OF A RECIPROCATING INTERNAL COMBUSTION ENGINE
DISPOSITIF A SOUPAPE DE COMMANDE SUPPLEMENTAIRE POUR UN CANAL D'ADMISSION D'UN MOTEUR A COMBUSTION INTERNE A PISTON

(30) Priorität: 30.06.2003 DE 10329400
(43) Veröffentlichungstag der Anmeldung: 29.03.2006
(73) Patentinhaber: SIEMENS AKTIENGESELLSCHAFT, 80333 München (DE)
(72) Erfinder: SCHRÖDER, Lothar, 61184 Karben (DE)
(86) Internationale Anmeldenummer: PCT/EP2004/051032
(87) Internationale Veröffentlichungsnummer: WO 2005/001256

(56) Entgegenhaltungen:
- EP-A- 0 599 195
- EP-A- 1 267 067
- DE-A- 3 626 681
- DE-A- 10 137 828

## Beschreibung

Die Erfindung bezieht sich auf eine Zusatzsteuerventileinrichtung für einen Einlasskanal einer Kolbenbrennkraftmaschine. Zusatzsteuerventileinrichtungen sind bekannt. In der DE 101 37 828 A1 wird eine in einem Einlasskanal einer Kolbenbrennkraftmaschine angeordnete Zusatzsteuerventileinrichtung beschrieben. Bei dieser Zusatzsteuerventileinrichtung ist es vorgesehen, ein Ventilglied anzuordnen, das im Wesentlichen pilzförmig ausgebildet ist und das in Richtung der Längsachse der Zusatzsteuerventileinrichtung reversibel beweglich geführt ist. Bei diesem Ventilglied ist an einem Schaft ein hutförmiger Teller angeordnet, der zu der vom Einlassventil abgewandten Seite hin konvex mit einem Scheitelpunkt ausgebildet ist. Die Eigenfrequenz des schwingungsfähigen Systems ist durch Federkonstanten und das Gewicht des Ventilgliedes gegeben. Der Schaft des Ventilgliedes endet an einem Bund. Zwischen dem Bund und dem Boden des Sackloches, in dem der Schaft geführt wird, stütz sich eine erste Feder ab. Zwischen dem Bund und dem anderen Ende des Sackloches stützt sich eine weitere Feder ab. Auf diese Weise bildet das Ventilglied zusammen mit den beiden Federn ein schwingungsfähiges System, welches von den Federn in einer Mittellage gehalten wird. Auf diese Weise wird sichergestellt, dass ein außerordentlich rascher Wechsel zwischen Offen- und Schließstellung möglich ist, wobei von dem Portalmagnet und dem Fangmagnet, zwischen denen das Ventilglied reversibel beweglich geführt wird, jeweils nur die Haltekraft aufgebracht werden muss und die kinetische Energie in den Federn gespeichert wird. Bei dieser Zusatzsteuerventileinrichtung ist jedoch nachteilig, dass der Ventilsitz alleine drei Funktionen erfüllen muss. Zum einen muss am Ventilsitz eine ausreichende Abdichtung des Ventilgliedes gegenüber der Druckdifferenz zwischen dem Umgebungsdruck und dem vom Motor erzeugten Unterdruck gewährleistet sein. Darüber hinaus wirkt der Ventilsitz als Anschlag, muss also die entsprechend wirkenden Aufprallkräfte aufnehmen. Als weiteres muss der Ventilsitz die erforderlichen magnetischen Eigenschaften aufweisen, so dass relativ geringe Schaltzeiten zwischen der geöffneten und der geschlossenen Stellung der Zusatzsteuerventileinrichtung realisiert werden können. Die gleichzeitige Optimierung dieser drei Funktionen gestaltet sich jedoch am Ventilsitz problematisch, so dass jeweils Kompromisse eingegangen werden müssen, was nicht erwünscht ist.

Der Erfindung liegt die Aufgabe zugrunde, eine Zusatzsteuerventileinrichtung für einen Einlasskanal einer Kolbenbrennkraftmaschine zu schaffen, bei der gleichzeitig eine gute Dichtwirkung, eine relativ gute Aufnahme der Aufprallkräfte sowie relativ gute magnetische Eigenschaften realisiert werden können.

Die der Erfindung zugrunde liegende Aufgabe wird durch eine Zusatzsteuerventileinrichtung für einen Einlasskanal einer Kolbenbrennkraftmaschine mit einem zwischen einem Portalmagneten und einem Fangmagneten in Richtung der Längsachse reversibel beweglich geführten Ventilglied gelöst, bei der auf der dem Ventilglied zugewandten Seite des Gehäuses, in dem der Portalmagnet angeordnet ist, eine umlaufende Dichtung angeordnet ist. Unter den Begriffen Portalmagnet und Fangmagnet sind jeweils die Kombination aus Magnet und Magnetjoch zu verstehen. Bei dem Ventilglied handelt es sich um die Kombination von einem Schaft und einem hutförmigen Teller, der zu der vom Einlassventil abgewandten Seite hin konvex mit einem Scheitelpunkt ausgebildet ist. Die umlaufende Dichtung ist ringförmig und durchgehend gestaltet. Sie besteht beispielsweise aus einem Elastomer und weist einen runden Querschnitt auf. Ihr Durchmesser richtet sich nach der Größe der Zusatzsteuerventileinrichtung und wird ingenieurmäßig jeweils so ausgelegt, dass bei Erreichen einer optimalen Dichtwirkung das Ventilglied am Ventilsitz anliegt. Die Befestigung der umlaufenden Dichtung am Gehäuse kann beispielsweise durch eine Rastverbindung oder durch Kleben erfolgen. Es hat sich in überraschender Weise gezeigt, dass die Zusatzsteuerventileinrichtung durch die Anordnung der Dichtung eine relativ hohe Dichtwirkung aufweist. Gleichzeitig dient die Dichtung der Aufnahme von Aufprallkräften, so dass der Ventilsitz nunmehr lediglich im Hinblick auf optimale magnetische Eigenschaften konstruktiv auszulegen ist. Dies hat zur Folge, dass die Dichtwirkung, die Aufnahme der Aufprallkräfte sowie die magnetischen Eigenschaften in gewünschter Weise nahezu optimiert werden können. Dies wird durch einen nur geringen konstruktiven Aufwand erreicht.

Eine bevorzugte Ausgestaltung der Erfindung besteht darin, dass die Dichtung an einer Seite von einem metallischen Formeinsatz begrenzt wird, der am Gehäuse fixiert ist. Bei dem metallischen Formeinsatz handelt es sich beispielsweise um einen kontinuierlich umlaufend ringförmig gestalteten Einsatz, der mit dem Gehäuse verbunden ist. Das Fixieren erfolgt dabei beispielsweise durch eine Schraub- oder Nietverbindung. Es ist jedoch auch möglich, unter bestimmten Bedingungen den metallischen Formeinsatz durch eine Klebeverbindung am Gehäuse zu fixieren. Die Anordnung eines metallischen Formeinsatzes ist vorteilhaft, da das Gehäuse für die Anordnung der Dichtung nur geringfügig zu bearbeiten ist. Somit können auch ältere Zusatzsteuerventileinrichtungen, deren Gehäuse, in dem der Portalmagnet angeordnet ist, zunächst nicht für die Anordnung einer Dichtung geeignet ist, auf relativ einfache Weise mit einer Dichtung nachgerüstet werden, da die Dichtung durch den als Widerlager wirkenden metallischen Formeinsatz auf relativ einfache Weise angeordnet werden kann.

Gemäß einer weiteren bevorzugten Ausgestaltung der Erfindung ist die Dichtung in einer umlaufenden Nut angeordnet. In einigen Fällen reicht dabei das Einbringen der Dichtung in vorteilhafter Weise in eine umlaufende Nut aus, um die Dichtung ausreichend zu fixieren. Bei größeren in der Zusatzsteuerventileinrichtung wirkenden Kräften kann die umlaufende Nut mit einem Klebstoff benetzt werden, bevor die Dichtung in die umlaufende Nut eingebracht wird. Auch bei größeren Kräften ist dann eine ausreichende Fixierung der Dichtung gewährleistet.

Eine weitere Ausgestaltung der Erfindung besteht darin, dass die umlaufende Nut vollständig in einem zum Gehäuse gehörenden, weiteren metallischen Formeinsatz angeordnet ist. Auch dieser metallische Formeinsatz kann beispielsweise ringförmig ausgebildet sein. Dabei ist vorteilhaft, dass eine Teileinheit, gebildet aus dem metallischen Formeinsatz und der umlaufenden Dichtung auf relativ einfache Weise in bereits vorhandene Zusatzsteuerventileinrichtungen eingebaut werden kann, was das Nachrüsten älterer Zusatzsteuerventileinrichtungen in vorteilhafter Weise erleichtert.

Gemäß einer weiteren Ausgestaltung der Erfindung ist vorgesehen, dass die umlaufende Dichtung einen Vorsprung aufweist, und die umlaufende Nut eine zum Vorsprung komplementär ausgeführte Aussparung aufweist. Dabei ist vorteilhaft, dass die umlaufende Dichtung auf relativ einfache Weise in der umlaufenden Nut durch Einklemmung ihres Vorsprunges in die komplementär ausgeführte Aussparung fixiert werden kann. Auch bei höheren Kräften, die in der Zusatzsteuerventileinrichtung wirken, kann dann auf die Anordnung von zusätzlichem Klebstoff verzichtet werden.

Eine weitere bevorzugte Ausgestaltung der Erfindung besteht darin, dass als Dichtung eine Flachringdichtung angeordnet ist. Flachringdichtungen eignen sich für vielerlei Einsatzzwecke in der Zusatzsteuerventileinrichtung und lassen sich auf relativ einfache Weise am Gehäuse zu fixieren.

Nach einer weiteren bevorzugten Ausgestaltung der Erfindung wird als Dichtung eine Lippendichtung angeordnet. Dies ist besonders dann vorteilhaft, wenn hohe Dämpfungseigenschaften im Betrieb der Zusatzsteuerventileinrichtung erforderlich sind.

Gemäß einer weiteren bevorzugten Ausgestaltung der Erfindung weist die Dichtung einen S-förmigen Querschnitt auf. Die S-Form kann dabei auch verzerrt ausgebildet sein. Sie muss somit nicht genau der Form des Buchstabens S entsprechen. Dabei ist von Vorteil, dass auch relativ hohe Dämpfungseigenschaften erreicht werden können.

Die Erfindung wird nachfolgend anhand der Zeichnung (Fig. 1 bis Fig. 3, Fig. 4 a) bis d), Fig. 5 bis Fig. 7) näher und beispielhaft erläutert.
Fig. 1 zeigt die Zusatzsteuerventileinrichtung im Längsschnitt.
Fig. 2 zeigt das vergrößerte Detail A gemäß Fig. 1.
Fig. 3 zeigt die Zusatzsteuerventileinrichtung im Längsschnitt in dreidimensionaler Form.
Fig. 4 a) bis d) zeigt alternative Ausgestaltungen der umlaufenden Dichtung im angeordneten Zustand.
Fig. 5 zeigt die Anordnung einer umlaufenden Dichtung mit einem Vorsprung in einer zum Vorsprung komplementär ausgeführten Aussparung.
Fig. 6 zeigt die Anordnung der Dichtung in Form einer Lippendichtung.
Fig. 7 zeigt die Anordnung einer Dichtung mit einem S-förmigen Querschnitt.

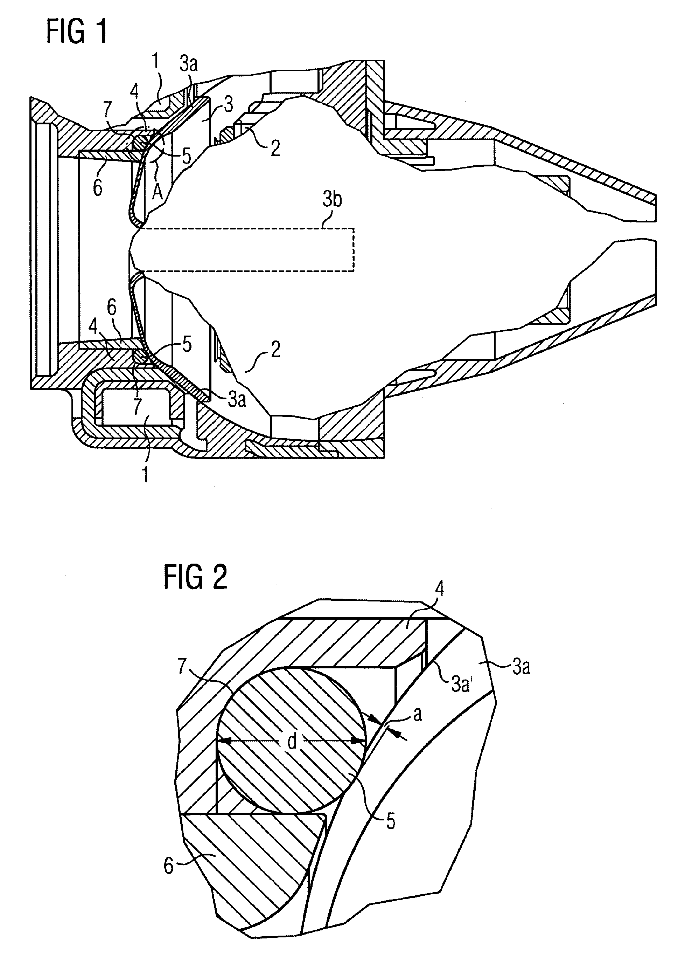

In Fig. 1 ist die Zusatzsteuerventileinrichtung für einen Einlasskanal einer Kolbenbrennkraftmaschine im Längsschnitt mit einem zwischen einem Portalmagneten 1 und einem Fangmagneten 2 in Richtung der Längsachse reversibel beweglich geführten Ventilglied 3 dargestellt. Das Ventilglied 3 besteht aus einem Ventilteller 3a und einem am Ventilteller 3a angeordneten Schaft 3b. Auf die Darstellung der inneren Teile der Zusatzsteuerventileinrichtung wurde aus Gründen der Übersichtlichkeit verzichtet. Der Portalmagnet 1 ist in einem Gehäuse 4 angeordnet. Auf der dem Ventilglied 3 zugewandten Seite des Gehäuses 4, in dem der Portalmagnet 1 angeordnet ist, ist eine umlaufende Dichtung 5 angeordnet. Die umlaufende Dichtung 5 hat in diesem Fall einen kreisförmigen Querschnitt und ist an einer Seite von einem metallischen Formeinsatz 6 begrenzt, der am Gehäuse 4 fixiert ist. Dieser metallische Formeinsatz 6 ist umlaufend ringförmig gestaltet. Die umlaufende Dichtung 5 ist darüber hinaus in einer umlaufenden Nut 7 angeordnet, was sich vorteilhaft auf die Fixierung der umlaufenden Dichtung 5 auswirkt. Fig. 1 zeigt die Zusatzsteuerventileinrichtung im geschlossenen Zustand.

In Fig. 2 ist das Detail A gemäß Fig. 1 schematisch vereinfacht und vergrößert dargestellt. Die umlaufende Dichtung 5, die einen kreisförmigen Querschnitt aufweist, hat in der Regel einen Durchmesser d im Bereich von 2 bis 5 mm, je nach Größe der Zusatzsteuerventileinrichtung und den in ihr herrschenden Druckverhältnissen. Wenn der Ventilteller 3a im geschlossenen Zustand der Zusatzsteuerventileinrichtung am Ventilsitz 3a' anliegt, sollte eine Verformung a im Bereich um ca. 0,1 mm realisiert sein. Dadurch wird eine relativ hohe Dichtwirkung auch bei höheren Drücken in der Zusatzsteuerventileinrichtung erreicht.

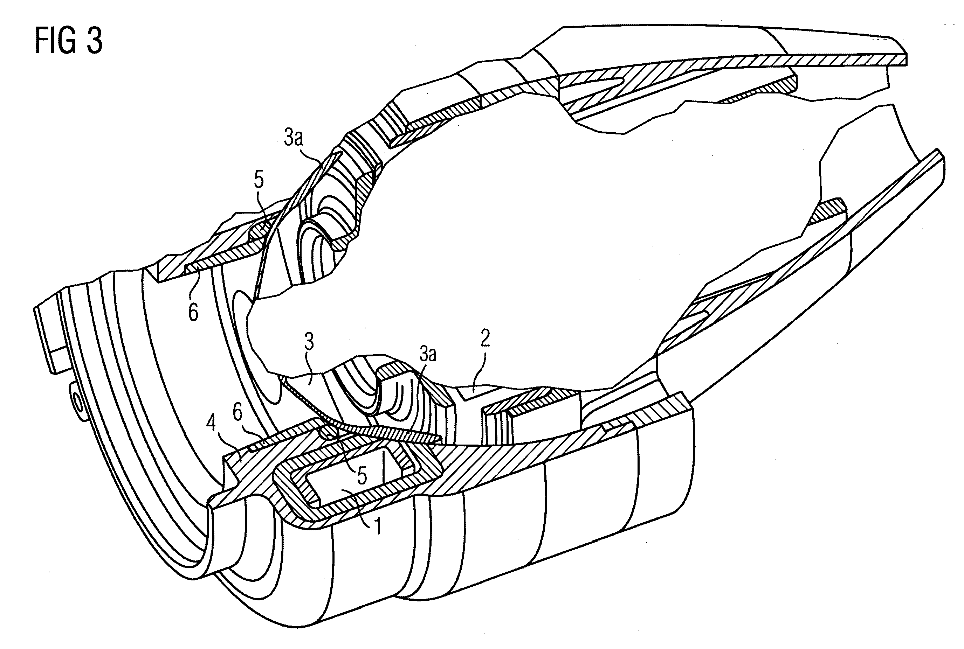

In Fig. 3 ist die Zusatzsteuerventileinrichtung dreidimensional im Längsschnitt dargestellt. Die Anordnung des Portalmagneten 1 im Gehäuse 4 wird dabei besonders deutlich. Auf die Darstellung der Innenteile der Zusatzsteuerventileinrichtung wurde auch hier aus Gründen der Übersichtlichkeit verzichtet.

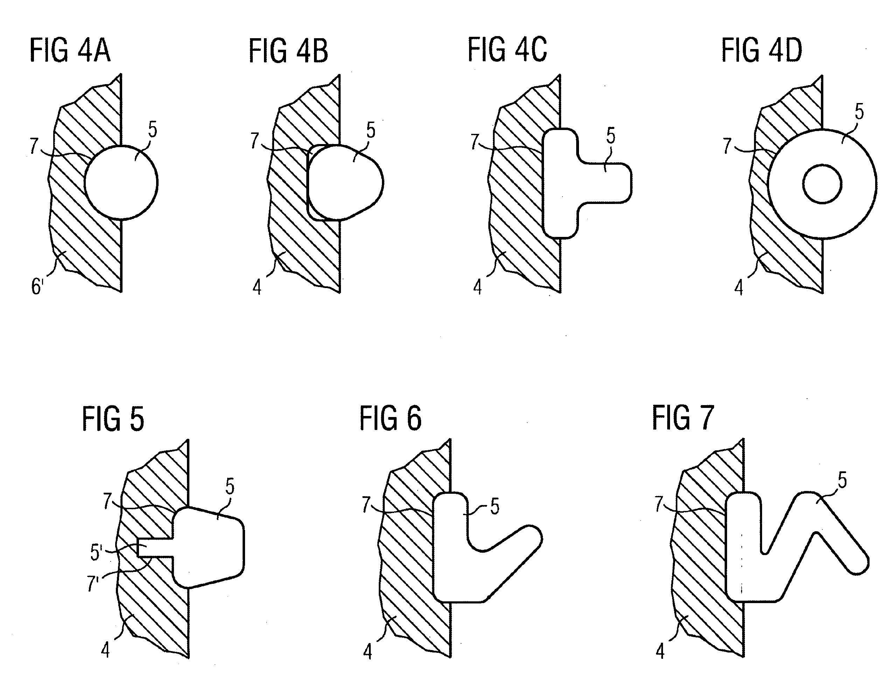

In Fig. 4 a) bis d) sind alternative Ausgestaltungen der umlaufenden Dichtung 5 dargestellt. In Fig. 4a) weist die umlaufende Dichtung 5 einen kreisförmigen Querschnitt auf und ist in einer umlaufenden Nut 7 angeordnet, die vollständig in einem zum Gehäuse (nicht dargestellt) gehörenden, weiteren metallischen Formeinsatz 6' angeordnet ist. Dieser weitere metallische Formeinsatz 6' kann dabei beispielsweise ähnlich umlaufend ringförmig ausgebildet sein, wie der metallische Formeinsatz in Fig. 1. Dabei ist vorteilhaft, dass die Teileinheit, gebildet aus dem weiteren metallischen Formeinsatz 6' und der umlaufenden Dichtung 5 vorab gefertigt werden kann und für Nachrüstzwecke zur Verfügung steht. Der weitere metallische Formeinsatz 6' ist dann zum Gehäuse (nicht dargestellt) gehörig anzusehen. Die in Fig. 4b) bis d) jeweils dargestellte umlaufende Dichtung 5 ist im Gehäuse 4, das jeweils eine umlaufende Nut 7 aufweist, angeordnet. Die jeweilige Ausführung der umlaufenden Dichtung hinsichtlich ihrer Querschnittsform richtet sich nach den jeweiligen Bedingungen in der Zusatzsteuerventileinrichtung. Dabei ist besonders vorteilhaft, dass die Zusatzsteuerventileinrichtung für vielerlei Einsatzzwecke, beispielsweise für ein relativ breites Spektrum von Druckkräften, bedingt durch verschiedene Motortypen, geeignet ist. Durch die Anordnung der umlaufenden Dichtung 5 wird dabei gleichzeitig der negative Einfluss von Fertigungstoleranzen bei der Fertigung von Ventilglied und Ventilsitz auf die Dichtheit bei gleichzeitiger Verbesserung der Dämpfungseigenschaften des Systems verringert. Bei einem starren Anschlag zwischen zwei metallischen Bauteilen, wie dies beispielsweise bei Zusatzsteuerventileinrichtungen nach dem Stand der Technik der Fall ist, kann dies nicht realisiert werden.

In Fig. 5 ist die Anordnung einer umlaufenden Dichtung mit einem Vorsprung 5' in dem Gehäuse 4 dargestellt, wobei die im Gehäuse 4 angeordnete umlaufende Nut 7 eine zum Vorsprung 5' komplementär ausgeführte Aussparung 7' aufweist. Die umlaufende Dichtung 5 kann dabei mit ihrem Vorsprung 5' auf relativ einfache Weise in die komplementär ausgeführte Aussparung 7' der umlaufenden Nut 7 eingepresst werden, so dass auf die Anordnung von Klebstoffen auch bei höherer Krafteinwirkung verzichtet werden kann. Es ist jedoch auch möglich, den Vorsprung 5' sowie die komplementär zum Vorsprung 5' ausgeführte Aussparung 7' konstruktiv anders auszubilden. Dabei kommen beispielsweise verschiedene Winkelanordnungen infrage.

In Fig. 6 ist die Anordnung der umlaufenden Dichtung 5 in Form einer Lippendichtung dargestellt. Sie ist dann besonders vorteilhaft, wenn höhere Dämpfungseigenschaften verlangt werden.

Fig. 7 zeigt die Anordnung einer umlaufenden Dichtung im Gehäuse 4, die einen S-förmigen Querschnitt aufweist. Sie ist besonders dann von Vorteil, wenn sehr hohe Dämpfungseigenschaften erforderlich sind.

## Patentansprüche

1. Zusatzsteuerventileinrichtung für einen Einlasskanal einer Kolbenbrennkraftmaschine mit einem zwischen einem Portalmagneten (1) und einem Fangmagneten (2) in Richtung der Längsachse reversibel beweglich geführten Ventilglied (3) **dadurch gekennzeichnet, daß** auf der dem Ventilglied (3) zugewandten Seite des Gehäuses (4) in dem der Portalmagnet (1) angeordnet ist, eine umlaufende Dichtung (5) angeordnet ist.

2. Zusatzsteuerventileinrichtung nach Anspruch 1, bei der die Dichtung (5) an einer Seite von einem metallischen Formeinsatz (6) begrenzt wird, der am Gehäuse (4) fixiert ist.

3. Zusatzsteuerventileinrichtung nach Anspruch 1 oder Anspruch 2, bei der die Dichtung (5) in einer umlaufenden Nut (7) angeordnet ist.

4. Zusatzsteuerventileinrichtung nach Anspruch 3, bei der die umlaufende Nut (7) vollständig in einem zum Gehäuse (4) gehörenden, weiteren metallischen Formeinsatz (6') angeordnet ist.

5. Zusatzsteuerventileinrichtung nach Anspruch 3 oder Anspruch 4, bei der die umlaufende Dichtung (5) einen Vorsprung (5') aufweist, und die umlaufende Nut (7) eine zum Vorsprung (5') komplementär ausgeführte Aussparung (7') aufweist.

6. Zusatzsteuerventileinrichtung nach einem der Ansprüche 1 bis 5, bei der als Dichtung (5) eine Flachringdichtung angeordnet ist.

7. Zusatzsteuerventileinrichtung nach einem der Ansprüche 1 bis 5, bei der als Dichtung (5) eine Lippendichtung angeordnet ist.

8. Zusatzsteuerventileinrichtung nach einem der Ansprüche 1 bis 5, bei der die Dichtung (5) einen S-förmigen Querschnitt aufweist.

## Claims

1. Additional control valve device for an inlet duct of a piston-type internal combustion engine, having a valve element (3) which is guided between a gantry magnet (1) and a trapping magnet (2) in a reversibly movable manner in the direction of the longitudinal axis, **characterized in that** an encircling seal (5) is arranged on that side of the housing (4), in which the gantry magnet (1) is arranged, which faces the valve element (3).

2. Additional control valve device according to Claim 1, in which the seal (5) is bounded on one side by a metallic shaped insert (6) which is fixed on the housing (4).

3. Additional control valve device according to Claim 1 or Claim 2, in which the seal (5) is arranged in an encircling groove (7).

4. Additional control valve device according to Claim 3, in which the encircling groove (7) is arranged completely in a further metallic shaped insert (6') belonging to the housing (4).

5. Additional control valve device according to Claim 3 or Claim 4, in which the encircling seal (5) has a projection (5'), and the encircling groove (7) has a cutout (7') designed in a complementary manner to the projection (5').

6. Additional control valve device according to one of Claims 1 to 5, in which a flat ring seal is arranged as the seal (5).

7. Additional control valve device according to one of Claims 1 to 5, in which a lip seal is arranged as the seal (5).

8. Additional control valve device according to one of Claims 1 to 5, in which the seal (5) has an S-shaped cross section.

## Revendications

1. Dispositif à soupape de commande supplémentaire pour un canal d'admission d'un moteur à combustion interne à pistons, comportant un élément soupape (3) mobile d'une façon réversible entre un aimant portique (1) et un aimant de capture (2) dans la direction de l'axe longitudinal, **caractérisé par le fait qu'**un joint circulaire (5) est disposé sur le côté, tourné vers l'élément soupape (3), du boîtier (4) dans lequel est monté l'aimant portique (1).

2. Dispositif à soupape de commande supplémentaire selon la revendication 1, dans lequel le joint (5) est limité sur un côté par un insert métallique (6) qui est fixé au boîtier (4).

3. Dispositif à soupape de commande supplémentaire selon la revendication 1 ou la revendication 2, dans lequel le joint (5) est disposé dans une rainure périphérique (7).

4. Dispositif à soupape de commande supplémentaire selon la revendication 3, dans lequel la rainure périphérique (7) est entièrement disposée dans un autre insert métallique (6') faisant partie du boîtier (4).

5. Dispositif à soupape de commande supplémentaire selon la revendication 3 ou la revendication 4, dans lequel le joint périphérique (5) comporte une avancée (5') et la rainure périphérique (7) comporte un évidement (7') complémentaire à l'avancée (5').

6. Dispositif à soupape de commande supplémentaire selon l'une des revendications 1 à 5, dans lequel un joint en anneau plat est mis en place en tant que joint (5).

7. Dispositif à soupape de commande supplémentaire selon l'une des revendications 1 à 5, dans lequel un joint à lèvres est mis en place en tant que joint (5).

8. Dispositif à soupape de commande supplémentaire selon l'une des revendications 1 à 5, dans lequel le joint (5) a une section transversale en forme de S.
